# EUROPEAN PATENT SPECIFICATION

(11) **EP 1 156 314 B1**
(45) Date of publication and mention of the grant of the patent: **25.07.2007**
(21) Application number: 01201729.9
(22) Date of filing: 11.05.2001
(51) Int. Cl.: G01M 1/36, F16F 15/36, F16F 15/32

(54) **Method and apparatus for the balancing of rollers and cylinders**
Verfahren und Vorrichtung zum Auswuchten von Walzen und Zylindern
Procédé et dispositif d'equilibrage des rouleaux et cylindres

(30) Priority: 17.05.2000 FI 20001182
(43) Date of publication of application: 21.11.2001
(73) Proprietor: Voith Patent GmbH, 89522 Heidenheim (DE)
(72) Inventor: Mantovaara, Tuomo, 90460 Oulunsalo (FI)
(74) Representative: Järveläinen, Pertti Tauno Juhani

(56) References cited:
- EP-A- 0 657 727
- WO-A-98/17925

## Description

The present invention relates to a method and apparatus for the balancing of at least one roller or cylinder, in which method the unbalance of the roller or cylinder is determined by measuring and, based on the measurement, balancing weights are set on the roller or cylinder.

The patent application WO-A-98/46973 presents a method for the balancing of a cylinder, e.g. a drying cylinder, used in a paper machine. In the method according to said specification, the wobble is determined by measuring and the required balancing is determined via computation. The cylinder is balanced by setting counterweights on the inner side of the cylinder barrel, the size and location of said counterweights being determined via computation on the basis of the wobble measurements.

At present, field balancing of rollers and cylinders, such as drying cylinders, has to be performed individually, and their rotational speed has to be increased and reduced several times to allow the measurements to be carried out and the correction weights to be mounted, because the weights are mounted while the cylinder or roller is stationary. Moreover, the rollers and cylinders are often wire-driven, in which case the wire has to be moved aside and the roller or cylinder has to be rotated separately for balancing. In field balancing of drying cylinders, cylinders under sectional drive additionally have to be disengaged from each other and provided with a rotating system so as to allow them to be rotated separately and the balancing to be performed. This is a very difficult and slow procedure, and consequently it requires a long shut-down.

EP-A-0 657 727 relates to an apparatus for dynamically balancing during rotation an energy-converting rotating machine. WO-A-98/17925 relates to a weight balance device for machines with rotors. Further, both of documents EP-A-0 657 727 and WO-A-98/17925 disclose a balancing principle where separate balancing units are used. In EP-A-0 657 727 the balancing apparatus is used in an energy-converting rotating machine designed to rotate about an axis and having a main shaft in several sections joined by couplings and supported in bearings and liable to develop an unbalance. The balancing apparatus in EP-A-0 657 727 is arranged on the main shaft adjacent to a bearing and comprises circular tracks coaxial with the axis, locating means for holding the tracks fixed relative to the axis and balancing masses carried by the track in a manner allowing them to be shifted and motors connected to the masses for shifting the masses relative to the track. WO-A-98/17925 concerns a dynamic and weight balance device for machines with rotors, like in industrial ventilating fans, comprising at least one rotor borne by a revolving shaft, a weight balancing unit borne by said shaft at the end of it, and a system for correcting and controlling the state of unbalance of the rotor, said system being capable of operating permanently on the balancing unit when the rotor is rotating. The weight balancing unit is located at an axial distance from the rotor and comprises two balance weights mounted movable independently of each other by the action of driving means controlled by the controlling and correcting system, said weights moving along paths forming a closed circuit about the revolving shaft.

The object of the present invention is to eliminate the drawbacks of prior-art solutions and to achieve a new type of field balancing method and apparatus for the balancing of rollers and cylinders. The method of the invention Method for balancing at least one roller or cylinder, in which method the unbalance of the roller or cylinder is determined by measuring and, based on the measurement, the roller or cylinder is provided with balancing weight units with weights to balance it, is characterized in that, while the roller or cylinder is rotating, at least some of the weights are moved by means of moving means fitted in the weights in the balancing weight units.

The method of the invention for the balancing of a set of two or more rollers or cylinders is defined in claim 1. An according apparatus is defined in claim 2.

In the balancing method of the invention, the means for fastening and moving the correction weights are mounted on the drying cylinder or equivalent while it is stationary, and the balancing can be performed during operation, and consequently a balanced condition and a reduction of the vibration level can be achieved during operation. When the machine is stationary, the movable weights can be replaced with fixed ones.

In the balancing method of the invention, the combined effects of the paper machine frame and the other cylinders rotating simultaneously are also taken into account. Thus, by the method of the invention it is possible to balance an aggregate consisting of a plurality of cylinders or rollers rotating simultaneously and thus to achieve a better final result.

In the following, the invention will be described in detail by the aid of an example with reference to the attached drawing, wherein
Fig. 1 presents a cross-sectional view of a drying cylinder with a balancing weight unit according to the invention, together with a measuring unit, and
Fig. 2 presents a lateral cross-section of a drying cylinder aggregate with a balancing system according to the invention.

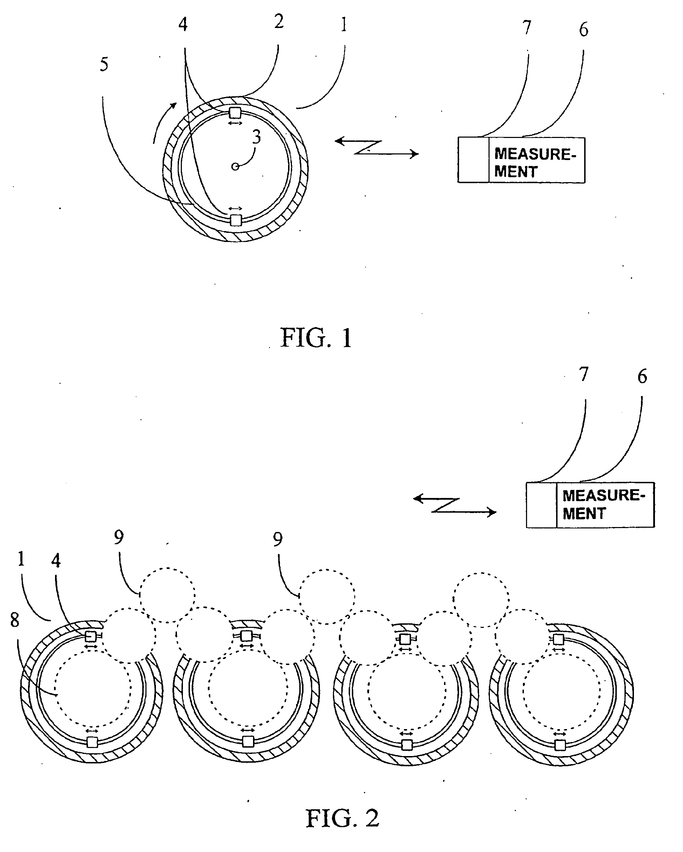

Fig. 1 presents a cross-section of a drying cylinder 1 comprising a cylinder barrel 2 and a central operating shaft 3. To allow balancing of the cylinder 1, it is provided with balancing weight units 4, which have been mounted on ring-like rails 5 on a stationary cylinder, said rails being fastened to the inside of the barrel 2, and an electronic measuring unit 6 for the measurement of unbalance. The cylinder may have several rails 5, each rail 5 carrying two balancing weight units 4.

According to the invention, the balancing weight units 4 consist of a weight movably mounted on the rail 5, an electrically operated moving means for moving the weight along the rail 5, and a receiver comprised in a radiofrequency transmitter-receiver system. The transmitter unit 7 of the transmitter-receiver system is fitted in the measuring unit 6.

The measuring unit 6 measures the unbalance of the cylinder 1 continuously during operation while the cylinder 1 is rotating (as indicated by the arrow) and controls the moving means via the transmitter-receiver system so as to cause the moving means to move (as indicated by the arrows) the balancing weight units 4 in order to establish a balanced condition. Once a balanced condition has been reached, the weights can be replaced with fixed weights e.g. during the next shut-down.

Fig. 2 presents a drying cylinder aggregate comprising a number of drying cylinders 1 (in Fig. 2, four cylinders by way of example) mutually engaged via a gear transmission comprising gears 8 fitted on the shafts of the cylinders 1 and transmission gears 9 between the cylinders 1. According to the invention, each cylinder is provided with balancing weight units 4 mounted on rails 5, and the cylinders are balanced while they are mutually engaged and rotating, by means of the transmitter-receiver system as described above.

It is obvious to the person skilled in the art that different embodiments of the invention are not restricted to the examples described above but that they may be varied within the scope of the claims presented below. Thus, in addition to drying cylinders, the apparatus of the invention can be used for the balancing of other cylinders and rollers as well, especially those in paper machines and equivalent. The balancing weight units can also be disposed on the outside of the rollers or cylinders. Moreover, e.g. in drying cylinders with hollow shafts, the control of the moving means may also be implemented using control cables connected to the measuring unit and passed via the hollow shaft into the space inside the cylinder, where they can be connected via a slip ring system to the moving means.

## Claims

1. Method for balancing an aggregate consisting of two or more rollers or cylinders (1), in which method the unbalance of the rollers or cylinders is determined by measuring and, based on the measurement, the rollers or cylinders are provided with weights movably mounted on rails to balance them, and, while the roller or cylinder is rotating, at least some of the weights are moved by means of moving means fitted in the weights,
**characterized in that**,
the rollers or the cylinders are paper machine rollers or cylinders, provided with balancing weight units (4) comprising a weight movably mounted on a rail and moving means fitted in the weight for moving the weight,
in which method
while the paper machine rollers or cylinders are rotating, at least some of the weights are moved by means of moving means fitted in the weights,
whereby the rollers or cylinders (1) are mutually engaged via a gear transmission comprising gears (8) fitted on the shafts of the rollers or cylinders (1) and transmission gears (9) between the rollers or cylinders (1), and
each roller or cylinder is provided with weight units (4),
**that** several rollers or cylinders are balanced simultaneously while they are rotating, and
that the rollers or cylinders are balanced during operation without disengaging them from each other.

2. Apparatus for balancing an aggregate consisting of two or more rollers or cylinders (1), said apparatus comprising a measuring unit (6) used to determine the unbalance of the rollers or cylinders by measuring and weights that are arranged movably on rails for balancing on the roller or cylinder on the basis of the measurement, and at least some of the weights can be moved by means of moving means fitted in them, and that the measuring unit controls the moving means so as to cause them to move at least some of the weights while the rollers or cylinders are rotating,
**characterized in that**
the rollers or the cylinders are paper machine rollers or cylinders,
provided with balancing weight units (4) comprising a weight movably mounted on a rail and moving means fitted in the weight for moving the weight,
whereby
at least some of the weights are arranged so that they can be moved by means of moving means fitted in them, and that the measuring unit is arranged to control the moving means so as to cause them in use to move at least some of the weights while the paper machine rollers or cylinders are rotating, whereby the rollers or cylinders (1) are mutually engaged via a gear transmission comprising gears (8) fitted on the shafts of the rollers or cylinders (1) and transmission gears (9) between the rollers or cylinders (1), and
each roller or cylinder is provided with weight units (4),
that several rollers or cylinders are arranged so that they can be balanced simultaneously while they are rotating , and
that the rollers or cylinders are further arranged so that they can be balanced during operation without disengaging them from each other.

## Patentansprüche

1. Verfahren zum Auswuchten eines aus zwei oder mehr Walzen oder Zylindern (1) bestehenden Aggregats, wobei bei dem Verfahren die Unwucht der Walzen oder Zylinder durch Messen ermittelt wird und auf Grundlage der Messung die Walzen oder Zylinder mit Gewichten versehen werden, die beweglich an Schienen angebracht werden, um sie auszuwuchten, und beim Drehen der Walze oder des Zylinders zumindest einige der Gewichte mittels in den Gewichten angebrachten Bewegungsmitteln bewegt werden,
**dadurch gekennzeichnet, dass**
die Walzen oder die Zylinder Papiermaschinenwalzen oder -zylinder sind, die mit Ausgleichsgewichtseinheiten (4), die ein beweglich an einer Schiene angebrachtes Gewicht umfassen, und im Gewicht angebrachten Bewegungsmitteln zum Bewegen des Gewichts versehen sind,
wobei bei dem Verfahren beim Drehen der Papiermaschinenwalzen oder -zylinder zumindest einige der Gewichte mittels in den Gewichten angebrachten Bewegungsmitteln bewegt werden,
wobei die Walzen oder Zylinder (1) über ein Zahnradgetriebe, das an den Wellen der Walzen oder Zylinder (1) angebrachte Zahnräder (8) umfasst, und Getriebezahnräder (9) zwischen den Walzen oder Zylindern (1) miteinander in Eingriff stehen, und jede Walze oder jeder Zylinder mit Gewichtseinheiten (4) versehen wird,
dass mehrere Walzen oder Zylinder gleichzeitig ausgewuchtet werden, während sie sich drehen, und
dass die Walzen oder Zylinder im Betrieb ausgewuchtet werden, ohne sie auseinander auszurücken.

2. Vorrichtung zum Auswuchten eines aus zwei oder mehr Walzen oder Zylindern (1) bestehenden Aggregats, wobei die Vorrichtung eine Messeinheit (6), die zur Ermittlung der Unwucht der Walzen oder Zylinder durch Messen verwendet wird, und Gewichte, die beweglich auf Schienen zum Auswuchten an der Walze oder am Zylinder auf Grundlage der Messung angeordnet sind, umfasst, und wobei zumindest einige der Gewichte mittels darin angebrachten Bewegungsmitteln bewegt werden können und die Messeinheit die Bewegungsmittel steuert, um zu bewirken, dass sie zumindest einige der Gewichte bewegen, während sich die Walzen und Zylinder drehen,
**dadurch gekennzeichnet, dass**
die Walzen oder Zylinder Papiermaschinenwalzen oder -zylinder sind, die mit Ausgleichsgewichtseinheiten (4), die ein beweglich auf einer Schiene angebrachtes Gewicht umfassen, und im Gewicht angebrachten Bewegungsmitteln zum Bewegen des Gewichts versehen sind,
wobei zumindest einige der Gewichte so angeordnet sind, dass sie mittels darin angebrachten Bewegungsmitteln bewegt werden können, und
dass die Messeinheit zur Steuerung der Bewegungsmittel angeordnet ist, um zu bewirken, dass sie im Gebrauch zumindest einige der Gewichte beim Drehen der Papiermaschinenwalzen oder -zylinder bewegen, wobei die Walzen oder Zylinder (1) über ein Zahnradgetriebe, das an den Wellen der Walzen oder Zylinder (1) angebrachte Zahnräder (8) umfasst, und Getriebezahnräder (9) zwischen den Walzen oder Zylindern (1) miteinander in Eingriff stehen, und jede Walze oder jeder Zylinder mit Gewichtseinheiten (4) versehen ist,
dass mehrere Walzen oder Zylinder so angeordnet sind, dass sie gleichzeitig ausgewuchtet werden können, während sie sich drehen, und
dass die Walzen oder Zylinder so angeordnet sind, dass sie im Betrieb ausgewuchtet werden können, ohne sie auseinander auszurücken.

## Revendications

1. Procédé pour équilibrer un ensemble constitué au moins de deux rouleaux ou cylindres (1), dans lequel le déséquilibre des rouleaux ou cylindres est déterminé par une mesure, et, sur la base de la mesure, les rouleaux ou cylindres sont pourvus de poids montés mobiles sur des rails pour les équilibrer, et, tandis que le rouleau ou le cylindre est entraîné en rotation, au moins certains des poids sont déplacés au moyen de moyens de déplacement ajustés dans les poids,
**caractérisé en ce que**
les rouleaux ou les cylindres sont des rouleaux ou des cylindres de machine à papier,
pourvus d'unités de poids d'équilibrage (4) comprenant un poids monté mobile sur un rail et des moyens de déplacement ajustés dans le poids afin de déplacer le poids,
dans lequel procédé,
tandis que les rouleaux ou les cylindres de la machine à papier sont entraînés en rotation, au moins certains des poids sont déplacés au moyen de moyens de déplacements ajustés dans les poids,
les rouleaux ou cylindres (1) étant ainsi mutuellement engagés par le biais d'une transmission à pignons comprenant des pignons (8) ajustés sur les arbres des rouleaux ou des cylindres (1) et des engrenages de transmission (9) entre les rouleaux ou cylindres (1), et
chaque rouleau ou cylindre étant pourvu d'unités de poids (4),
plusieurs rouleaux ou cylindres étant équilibrés simultanément au cours de leur rotation et
les rouleaux ou cylindres étant équilibrés au cours du fonctionnement sans les désengager les uns des autres.

2. Appareil pour équilibrer un ensemble constitué au moins de deux rouleaux ou cylindres (1), ledit appareil comprenant une unité de mesure (6) utilisée pour déterminer le déséquilibre des rouleaux ou cylindres par une mesure et des poids qui sont agencés de manière mobile sur des rails pour équilibrer le rouleau ou le cylindre sur la base de la mesure, et au moins certains des poids pouvant être déplacés au moyen de moyens de déplacement ajustés à l'intérieur d'eux, et l'unité de mesure commandant les moyens de déplacement de manière à leur faire déplacer au moins certains des poids tandis que les rouleaux ou cylindres tournent,
**caractérisé en ce que**
les rouleaux ou les cylindres sont des rouleaux ou des cylindres de machine à papier,
pourvus d'unités de poids d'équilibrage (4) comprenant un poids monté mobile sur un rail et des moyens de déplacement ajustés dans le poids afin de déplacer le poids,
au moins certains des poids étant arrangés de telle sorte qu'ils puissent être déplacés par les moyens de déplacement ajustés à l'intérieur d'eux, l'unité de mesure étant arrangée pour commander les moyens de déplacement de manière à leur faire, en fonctionnement, déplacer au moins certains des poids tandis que les rouleaux ou les cylindres de la machine à papier tournent, les rouleaux ou les cylindres (1) étant engagés mutuellement par le biais d'une transmission à pignons comprenant des pignons (8) ajustés sur les arbres des rouleaux ou des cylindres (1) et des engrenages de transmission (9) entre les rouleaux ou cylindres (1), et
chaque rouleau ou cylindre étant pourvu d'unités de poids (4),
plusieurs rouleaux ou cylindres étant arrangés de manière à pouvoir être équilibrés simultanément au cours de leur rotation et
les rouleaux ou cylindres étant arrangés de manière à pouvoir être équilibrés au cours du fonctionnement sans les désengager les uns des autres.
